# EUROPEAN PATENT APPLICATION

(11) **EP 2 023 616 A1**
(43) Date of publication of application: **11.02.2009**
(21) Application number: 08013259.0
(22) Date of filing: 23.07.2008
(51) Int. Cl.: H04N 5/44

(54) **Interface structure of PC-integrated TV**

(30) Priority: 23.07.2007 KR 20070073281
(71) Applicant: IT SALUX Co. Ltd., Guro-gu Seoul (KR)
(72) Inventor: Kim, Joon-Young, Incheon-City 403-739 (KR); Gang, Bong-Oh, Incheon-City 407-061 (KR)
(74) Representative: Schoppe, Fritz

(57) **Abstract**

Provided is a PC-integrated TV including a PC unit that includes a PC main board having a CPU, a main memory device, a video controller, an audio controller, and a system chipset provided thereon and an auxiliary memory device having an operating system mounted therein, a TV unit that includes a TV signal processing section configured to process TV signals and a controller configured to process internal and external controls, a Switching Mode Power Supply (SMPS) unit that supplies power to the TV unit and PC unit, and a PC-TV interface unit that serves as an interface between the TV unit and the PC unit. The PC-TV interface unit connects the video controller, the audio controller, and the system chipset of the PC unit to the TV signal processing section and the controller of the TV unit. Therefore, it is possible to provide an interface structure of the PC-integrated TV, through which a large quantity of analog signals and digital data can be delivered to the TV unit and control signals generated from the TV unit can be delivered to the PC unit.

## Description

### CROSS-REFERENCE TO RELATED APPLICATION

This application claims priority to and the benefit of Korean Patent Application No. 2007-0073281, filed in July 23, 2007, the disclosure of which is incorporated herein by reference in its entirety.

### BACKGROUND

### 1. Field of the present invention

The present invention relates to a personal computer (PC) and a television (TV) set, and more specifically, to an interface structure between a PC unit and a TV unit in a PC-integrated TV.

### 2. Discussion of Related Art

TVs have become a leading role in home entertainment. Recently, however, PCs have also become an important role in home entertainment, with the development of multimedia technology. The enhancement in computation performance and integrated signal processing ability of PCs caused by the digitalization of multimedia is increasing the importance of PCs. The enhancement in processing ability of PCs is obtained not only by simple improvement of the computation ability of central processing units (CPUs) but also by the integrated signal processing ability for digitalized multimedia data. For example, as moving picture compression/decompression techniques such as Moving Picture Experts Group (MPEG) and audio compression/decompression techniques such as MPEG Audio layer 3 (MP3) emerge and video controllers and audio controllers which can reproduce high-quality images and sounds are integrated into hardware, PCs are becoming an important role in home entertainment.

A simplest example of a PC utilized as a main component of home entertainment is a case in which a PC is connected to a TV such that an external input terminal of the TV receives a video output of the PC. In this case, an output of a video controller mounted in the PC is displayed on the TV screen, which is equivalent to a case in which the TV is used as a monitor of the PC. An audio output of the PC may be connected to a speaker through a separate sound processing amplifier, or may be connected to an active speaker having an amplifier embedded therein.

Another example is a PC-integrated TV. Compared to the above-described case where an image output of the PC is input as an external input of the TV, the PC-integrated TV is an advanced form which enables a user to perform integrated manipulation. Through the PC-integrated TV, a user can watch motion pictures reproduced by the PC, or can perform web-surfing. Conventional PC-integrated TVs, which have been launched on the market so far, are manufactured by simply integrating a TV and a PC.

An important aspect of the PC-integrated TV is an interface configuration between a PC unit (e.g. a PC main board) and a TV unit (e.g. a TV board) which are main components composing the PC-integrated TV.

In the PC-integrated TV, the TV unit plays a leading role, and the PC unit operates under the control of the TV unit. Therefore, it is important to implement an interface structure through which data processed by the PC unit can be reliably delivered to the TV unit. As described above, the main reason why the PC plays a leading role in home entertainment is the enhancement in computation performance of the PC and the integrated signal processing ability caused by the digitalization of multimedia. Therefore, there is a demand for an interface structure through which a large quantity of analog signals and digital data processed in the PC unit can be delivered to the TV unit and control signals generated from the TV unit can be effectively delivered to the PC unit.

### SUMMARY OF THE PRESENT INVENTION

The present invention provides an interface structure of a PC-integrated TV, through which data and control signals between a PC unit and a TV unit can be reliably delivered.

In example embodiments, a PC-integrated TV includes: a PC unit that includes a PC main board having a CPU, a main memory device, a video controller, an audio controller, and a system chipset provided thereon and an auxiliary memory device having an operating system mounted therein; a TV unit that includes a TV signal processing section configured to process TV signals and a controller configured to process internal and external controls; a Switching Mode Power Supply (SMPS) unit that supplies power to the TV unit and PC unit; and a PC-TV interface unit that serves as an interface between the TV unit and the PC unit. The PC-TV interface unit connects the video controller, the audio controller, and the system chipset of the PC unit to the TV signal processing section and the controller of the TV unit.

The PC-TV interface unit may be composed of a 40-pin connector.

The PC main board of the PC unit may further include a Universal Serial Bus (USB) controller, the TV unit may include input/output ports of the USB controller, and the PC-TV interface unit may connect the USB controller of the PC main board to the input/output ports.

The PC main board of the PC unit may further include an Ethernet controller, the TV unit may include input/output ports of the Ethernet controller, and the PC-TV interface unit may connect the Ethernet controller of the PC main board to the input/output ports.

The PC-TV interface unit may deliver RGB signals output from the video controller of the PC unit to the TV signal processing section of the TV unit.

The PC-TV interface unit may deliver analog or digital audio signals output from the audio controller of the PC unit to the TV signal processing section of the TV unit.

The PC-TV interface unit may deliver control signals generated from the controller of the TV unit to the system chipset of the PC unit.

### BRIEF DESCRIPTION OF THE DRAWINGS

The above and other objects, features and advantages of the present invention will become more apparent to those of ordinary skill in the art by describing in detail example embodiments thereof with reference to the attached drawings, in which:
Fig. 1 is a block diagram of a PC-integrated TV according to the present invention; and
Fig. 2 is a diagram showing a configuration example of a PC-TV interface unit of the PC-integrated TV according to the present invention.

### DETAILED DESCRIPTION OF EXAMPLE EMBODIMENTS

Hereinafter, an example embodiment of the present invention will be described with reference to the accompanying drawings.

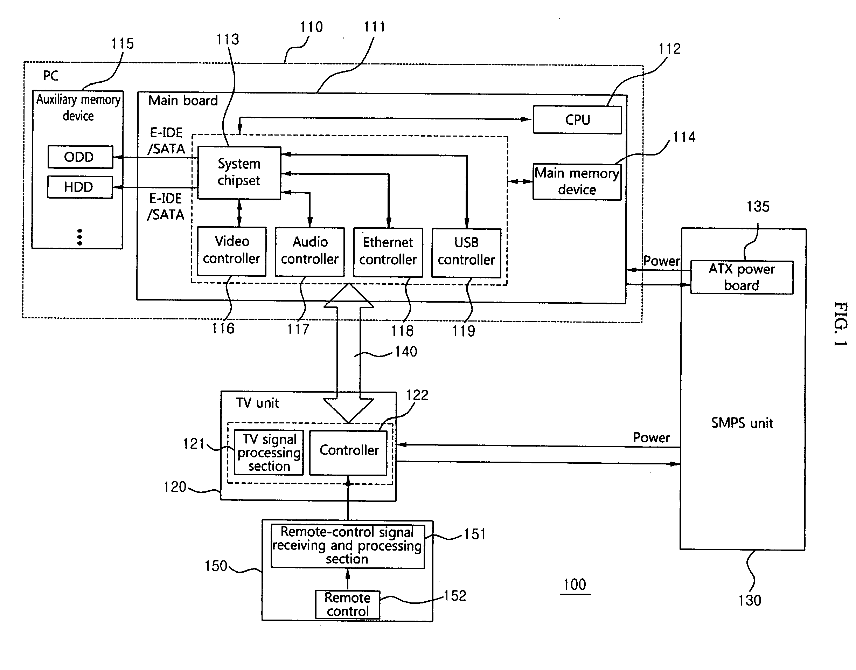

Fig. 1 is a block diagram of a PC-integrated TV according to the present invention.

As shown in Fig. 1, the PC-integrated TV 100 according to the present invention includes a PC unit 110, a TV unit 120, a Switching Mode Power Supply (SMPS) unit 130, and a PC-TV interface unit 140.

The PC unit 110 includes a main board 111, a Central Processing Unit (CPU) 112, a system chipset 113, a main memory device 114, and an auxiliary memory device 115. The CPU 112, the system chipset 113, and the main memory device 114 are mounted on the main board 111. For the main memory device 114, D-RAM is mainly used, and for the auxiliary memory device 115, a Hard Disk Drive (HDD) or a flash memory may be used. Meanwhile, although not shown in Fig. 1, the PC unit 110 may include a video controller 116 which generates and outputs image signals and an audio controller 117 which generates and outputs 2-channel or multi-channel analog or digital audio signals. In general, the video controller 116 and the audio controller 117 are mounted on the main board 111. In addition, the PC unit 110 may include an Ethernet controller 118 mounted on the main board 111. Further, the PC unit 110 may include a Universal Serial Bus (USB) controller 119 mounted on the main board 111.

For the main board 111, various types of main boards may be adopted. In general, an Advanced Technology Extension (ATX)-type board may be adopted. To satisfy demand for a reduction in thickness, a board having a size that is designed to be suitable for the standard of a housing having a mini-ATX board and a PC-integrated TV 100 mounted therein may be adopted, thereby reducing the external size of a product. Meanwhile, ATX is an industrial open standard for main boards of desktop computers, and the ATX-type board can secure a space in which a larger number of expansion cards can be housed and has a small number of cables and excellent cooling efficiency. Therefore, the ATX-type board is suitable for the characteristic of the PC-integrated TV.

For the CPU 112 mounted on the PC unit 110, Intel x86 CPUs or CPUs having compatibility with Intel x86 CPUs may be adopted when the PC unit is an IBM-based PC. The system chipset 113 which controls the entire PC unit 112 in a hardware manner serves as a main memory device controller, an interface of expansion slots, a disk interface, and an interface of keyboard and mouse. In general, the system chipset 113 is composed of two (North Bridge and South Bridge) or three (MCH: Memory Control Hub, ICH: I/O Control Hub, and FWH: Firmware Hub) chips which perform different functions from each other. The configuration may differ depending on the type of the chipset. Recently, an all-in-one system processor chip in which a north bridge chip and a south bridge chip are integrated and a video controller and an audio controller are integrated has frequently been applied to a system of which the size and weight is reduced. A system processor such as Cx700/Cx700m made by VIA may be taken as an example. Therefore, when the above-described all-in-one system processor is used, the system chip set 113, the video controller 116, the audio controller 117, the Ethernet controller 118, and the USB controller 119 may be embedded into one chip. Fig. 1 shows an example embodiment where the video controller 116, the audio controller 117, the Ethernet controller 118, and the USB controller 119 are provided on the main board 111 separately from the system chipset 113. The term 'system chipset' is limited to a conventional system chipset which serves as a main memory device controller, an interface of expansion slots, a disk interface, and an interface of keyboard and mouse. Even when the video controller 116, the audio controller 117, the Ethernet controller 118, and the USB controller 119 are embedded as one chip into the system chipset 113, it should be understood that the respective components are discriminated from one another.

For the main memory device 114, D-RAM is generally used. Recently, Double Data Rate-DRAM (DDR-DRAM) is mainly applied. For the auxiliary memory device 115, an HDD or a flash memory may be applied. The auxiliary memory device 115 is connected to the system chipset 113 through a parallel interface such as extended-IDE (E-IDE) or a serial interface such as serial AT attachment (SATA). In general, the HDD may be applied as the auxiliary memory device. However, considering impact resistance, power consumption, and noise reduction, it may be advantageous that the flash memory is applied. The auxiliary memory device 115 may include an Optical Disc Drive (ODD) such as DVD-ROM, DVD±RW, blue ray, HD-DVD, CD-ROM, CD-RW or the like. The ODD may be connected to the system chipset 113 through an interface such as E-IDE or SATA.

Meanwhile, the TV unit 120 includes a TV signal processing section 121 which processes image signals and audio signals of the TV. The TV signal processing section 121 is a typical component of the TV, which receives image signals in accordance with TV signal formats (for example, analog signals such as NTSC, SECAM, or PAL or digital TV signals) and outputs the image signals to a display panel.

Further, the TV unit 120 may include a controller 122 which controls the interface with the PC unit 110 and processes control signals of the TV unit 120. Recently, a one-chip solution manufactured in the form of a dual-core chip has been provided. In the one-chip solution, the TV signal processing section 121 for processing TV signals and the controller 122 which has firmware mounted therein through predetermined programming to receive remote control signals and to process the generation of On Screen Display (OSD) output on a TV screen are included in one chip.

An example of such a one-chip solution is VCT-Pro chip made by Micronas in Switzerland, in which 8-bit microcomputers (8051 compatible) are embedded as the TV signal processing section 121 for processing TV signals and the controller 122. However, when the TV unit 120 is not implemented with a dual-core chip provided by integrating the TV signal processing section 121 and the controller 122, a microcomputer may be provided as the controller 122 separately from the TV signal processing section 121.

The SMPS unit 130 serves to supply power to the PC unit 110 and the TV unit 120. Since the SMPS has an advantage in size reduction and efficiency, the SMPS is suitable for reducing the weight and size of electronic products and is widely used for a main power supply device. The SMPS unit 130 receives an AC voltage of 110 or 220V to convert the AC voltage into various DC voltages within the range of 3.3 to 48V and supplies the DC voltages (for example, +12V, +5V, and +3.3V). In a standby state, the SMPS unit 130 supplies a low voltage (for example, 5V) to the PC unit 110 and the TV unit 120. Then, the voltage is applied to the controller 122 of the TV unit 120 to be operated.

Meanwhile, the SMPS unit 130 may have a separate component provided therein. That is, when the main board 111 of the PC unit 110 is an ATX-type main board, the SMPS unit 130 additionally includes an ATX power board 135 for power management.

Since the PC unit 110 and the TV unit 120 commonly receive power through the SMPS unit 130 in the PC-integrated TV 100 according to the present invention, the ATX power board 135 which converts power of the SMPS unit 130 and supplies to the main board 111 of the PC unit may be separately provided, unlike a case where an ATX SMPS dedicated to a general PC is used. Therefore, since the SMPS unit 130 may be configured to include the ATX power board 135, the ATX power board 135 is illustrated as a separate additional component in Fig. 1. According to another example embodiment, separate SMPS units may be provided in the TV unit 120 and the PC unit 110, respectively. In this case, an ATX power supply dedicated to the ATX main board may be applied to the PC unit, and the ATX power board 135 may be omitted.

The TV unit 120 may be configured to have input/output ports connected to the Ethernet controller 118, the USB controller 119 and so on, which may be mounted in the PC unit 110. Typically, a circuit board composing the TV unit 120 may include a variety of input/output ports. For example, TV antenna inputs and external image signal (component input, S-VHS input, and HDMI input) inputs may be included. A housing forming the external shape of the PC-integrated TV 100 is constructed in such a manner that the input/output ports of the circuit board composing the TV unit 120 are exposed to the outside. Therefore, it may be effective that input/output ports (USB port and RJ-45 port) corresponding to the Ethernet controller 118 and the USB controller 119 positioned on the PC unit 110 are provided on the circuit board composing the TV unit 120.

Referring again to Fig. 1, the PC unit 110 and the TV unit 120 may be connected to each other through the PC-TV interface unit 140. The PC-TV interface unit 140 may be configured in various manners depending on the type of a system which is to be implemented.

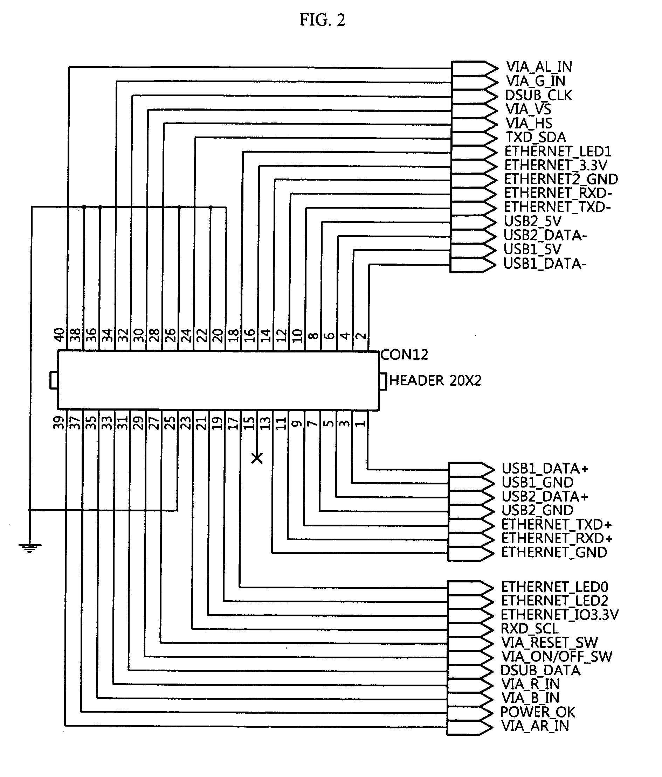

Fig. 2 is a diagram showing a configuration example of the PC-TV interface unit of the PC-integrated TV according to the present invention.

Referring to Fig. 2, it can be found that a 40-pin universal connector (for example, a board-to-board connector) is applied as the PC-TV interface unit 140 between the PC unit 110 and the TV unit 120 of the PC-integrated TV 100 according to the present invention. The roles of the allocated pins can be explained through Table 1.

Fig. 2 shows an example of signal mapping of the PC-TV interface unit 140 according to an example embodiment where an ATX board is applied as the main board 111 of the PC unit 110 and one (Cx700m) of chipsets made by VIA is applied as the system chipset 113 of the main board. Therefore, the signal mapping is partially determined by the input configuration of VIA chipset. However, even when another system chipset is applied, similar pin allocation may be carried out.

For example, the PC-TV interface unit 140 taken as an example through Fig. 2 is configured to integrate image and audio signals of the PC unit 110, data therebetween, and control signals to transmit the integrated result to the TV unit 120. Further, when the input/output ports of the Ethernet controller 118 and the USB controller 119 positioned on the PC unit 110 are mounted on the circuit board included in the TV unit 120, the Ethernet controller 118 and the USB controller 119 within the PC unit 110 can be connected to the corresponding input/output ports of the TV unit 120, respectively.

Table 1 shows the pin allocation of the 40-pin connector applied as the PC-TV interface unit 140 between the PC unit and the TV unit, which is shown in Fig. 2.

**[Table 1]**

| No. | Name | Pin description | No. | Name | Pin description |
|---|---|---|---|---|---|
| 1 | USB1_DATA+ | +data line of USB1 | 21 | GND | GND |
| 2 | USB1_DATA- | -data line of USB1 | 22 | GND | GND |
| 3 | USB1_GND | GND of USB1 | 23 | RXD_SCL | Communication line between VIA chip and TV (UART:RXD, 12C:SCL) |
| 4 | USB1_5V | 5V power of USB1 | 24 | TXD_SDA | Communication line between VIA chip and TV (UART:RXD, 12C:SCA) |
| 5 | USB2_DATA+ | +data line of USB2 | 25 | GND | GND |
| 6 | USB2_DATA- | -data line of USB2 | 26 | GND | GND |
| 7 | USB2_GND | GND of USB2 | 27 | VIA_RESET_SW | Active Low VIA reset SW |
| 8 | USB2_5V | 5V power of USB2 | 28 delivered | VIA_HS | Image HSYNC signal from VIA |
| 9 | ETHERNET_TXD+ | +TX data line of Ethernet | 29 | VIA_ON/OFF_SW | Active Low VIA power SW |
| 10 | ETHERNET_TXD- | -TX data line of Ethernet | 30 | VIA_VS | Image VSYNC signal delivered from VIA |
| 11 | ETHERNET_RXD- | +RX data line of Ethernet | 31 | DSUB_DATA | DDC 12C data line |
| 12 | ETHERNET RXD- | -RX data line of Ethernet | 32 | DSUB_CLK | DDC 12C CLK line |
| 13 | ETHERNET1_GND | Connected by binding Nos. 4 and 5 of Ethernet connector | 33 | VIA_R_IN | Image R signal delivered Image R signal delivered |
| 14 | ETHERNET2_GND | Connected by binding Nos. 7 and 8 of Ethernet connector | 34 | VIA_G_IN | Image G signal delivered from VIA |
| 15 | NC | | 35 | VIA_B_IN | Image B signal delivered from VIA |
| 16 | ETHERNET_3.3V | Ethernet LED power | 36 | GND | GND |
| 17 | ETHERNET_LED0 | Ethernet Link Act LED | 37 | POWER_OK | When VIA board is on, high When VIA board is off, low (check state of VIA board) |
| 18 | ETHERNET_LED1 | Ethernet Active LED | 38 | GND | GND |
| 19 | ETHERNET_LED2 | No connection | 39 | VIA_AR_IN | Right sound delivered from VIA |
| 20 | GND | GND | 40 | VIA_AL_IN | Left sound delivered from VIA |

### Detailed descriptions of main signals processed by PC-TV interface unit

### 1) Signals 1-8 (Signals related to USB interface)

In an example embodiment shown in Table 1, a USB controller capable of controlling two USB input/output ports is mounted on the PC unit 110.

Each of the USB input/output ports provided in the TV unit 120 is composed of four lines including a power supply line (5V, VBUS), two data lines DATA+ and DATA-, and one ground line GND, and is connected to the USB controller 119 included in the PC unit 110.

### 2) Signals 9-14 and 16-19 (Signals related to Ethernet controller)

In the example embodiment shown in Table 1, the Ethernet controller 118 mounted in the PC unit 110 and the TV unit 120 are connected through 10 signal lines.

Among 10 signal lines, 6 signal lines ETHERNET_TXD+, ETHERNET_TXD-, ETHERNET_RXD+, ETHERNET_RXD-, ETHERNET1 GND, and ETHERNET2_GND are allocated as signal lines for transmitting and receiving data and ground lines.

The other 4 signal lines ETHERNET_3.3V, ETHERNET_LEDO, ETHERNET_LED1, and ETHERNET_LED2 are for controlling Light Emitting Diodes (LEDs) which indicate the Ethernet connection state and the data communication state. Typically, a portion of the circuit board of the TV unit 120, where the input/output ports are mounted, is exposed to the outside from the housing of the PC-integrated TV. Therefore, LEDs may be mounted on the circuit board of the TV unit 120 so as to indicate the operation state of the Ethernet controller through the 4 signal lines.

### 3) Signals 23, 24, 31, and 32 (Communication between system chipset and TV unit)

The signal lines 23 (RXD_SCL), 24 (TXD_SDA), 31 (DSUB_DATA), and 32 (DSUB_CLK) are allocated for the communication between the PC unit 110 and the controller 122 of the TV unit.

The signal lines RXD_SCL and TXD_SDA are signal lines for delivering a remote-control reception signal, generated from the controller 122 of the TV unit, to a super I/O controller within the system chipset 113 of the PC unit 110, and the signal lines DSUB_DATA and DSUB_CLK are I2C interface lines for a Display Data Channel (DDC) interface with the video controller 116 included in the PC unit 110.

### 4) Signals 27, 29, and 37 (Signals for power management)

The signal lines 27 (VIA_RESET_SW), 29 (VIA_ON/OFF_SW), and 37 (POWER_OK) are for the integrated power management of the PC-integrated TV 100 according to the present invention.

The signal line VIA_RESET_SW, which is for resetting the PC unit 110, may be configured in a hard-wired form to receive an input of a reset button provided on the housing of the PC-integrated TV, or may be configured to receive an electrical signal generated through the controller 122 of the TV unit when a predetermined reset menu is selected from the operation menu of the PC-integrated TV.

The signal POWER_OK is mapped with "Power Good" signal (PWR_OK signal) according to the ATX power supply standard, which is delivered from the ATX power board 135 included in the SMPS unit 130, and the signal VIA_ON/OFF_SW is mapped with a power button input (for example, PWRBTN# signal in the case of VIA Cx700m chipset) of the system chipset 113. The signal POWER_OK is for checking the operation state of the PC unit 110, and the signal VIA_ON/OFF_SW is for turning on/off the PC unit 10 and is used for the integrated power management of the PC unit 110 and the TV unit 120.

### 5) Signals 28, 30, 33-35 (Video signals)

The signal lines 28 (VIA_HS) and 30(VIA_VS) constitute a horizontal sync signal and a vertical sync signal of a video signal, respectively.

The signal lines 33 (VIA_R_IN), 34 (VIA_G_IN), and 35 (VIA_B_IN) constitute red (R), green (G), and blue (B) signals of pixels. With the sync signals, the R, G, and B signals are input to the TV signal processing section 121 of the TV unit 120 so as to constitute an output screen of the PC unit 110.

### 6) Signals 39 and 40 (Audio signals)

The signal lines 39 (VIA_AR_IN) and 40 (VIA_AL_IN) constitute 2-channel analog audio signals. The example embodiment shown in Table 1 shows a configuration in which 2-channel analog audio signals are output from the audio controller 117 of the PC unit 110. However, another configuration may be applied, in which 5.1-channel analog audio signals or digital signals are output.

According to the configuration taken as an example through Fig. 2 and Table 1, it can be found that the functions of the video controller 116 and the audio controller 117 are integrated into the system chipset 113. For example, the signals VIA_HS, VIA_VS, VIA_R_IN, VIA_G_IN, and VIA_B_IN are image signals output from the video controller integrated with the system chipset 113, and the signals VIA_AR_IN and VIA_AL_IN are audio signals output from the audio controller integrated with the system chipset 113. When the system chipset having the video controller and the audio controller integrated therein is not used, a different configuration may be applied. For example, when a separate video controller or audio controller is mounted on the main board 111 of the PC unit 110, signals output from the video controller and the audio controller are mapped.

The PC-integrated TV 100 according to the present invention may further include a user interface unit 150 which receives a user input for the PC unit 110 and the TV unit 120.

In the PC-integrated TV according to the present invention, the PC unit 110 and the TV unit 120 can be integrally operated through one user interface. For the user interface 140, various interface devices may be applied. Considering that the PC-integrated TV is mainly used for home entertainment, it is preferable that a remote-control type user interface is applied.

For example, when the PC-integrated TV is utilized in a living room as a main device for home entertainment, it is preferable that integrated manipulation for the PC-integrated TV can be performed through a remote control in the same way as user manipulation for a conventional TV set is performed through a remote control.

Therefore, referring again to Fig. 1, the user interface unit 150 of the PC-integrated TV according to the present invention may include a remote-control signal receiving and processing section 151 and a remote control 152. The remote-control signal receiving and processing section 151 receives Radio Frequency (RF) signals or infra-red signals generated from the remote control 152 and then converts the RF signals or infra-red signals into electrical signals to deliver the converted signals to the controller 122 of the TV unit 120.

Meanwhile, user manipulations which can be received through the remote control 142 include typical manipulations such as channel change, volume control, and screen mode change, which are required in a conventional TV set and controls for the PC unit. The controls for the PC unit may include a key input for manipulating a user interface screen, which can be executed in the PC unit, an execution key input for selecting various applications which can be executed in the PC unit, and control operations allocated to specific applications. For example, when a specific application is a DVD player or a music/motion picture player, manipulations such as play, pause, Fast Forward (FF), and Rewind (REW) may be included in the controls for the PC unit.

According to the present invention, it is possible to provide an interface structure of the PC-integrated TV, through which a large quantity of analog signals and digital data can be delivered to the TV unit and control signals generated from the TV unit can be delivered to the PC unit.

While the present invention has been shown and described with reference to certain example embodiments thereof, it will be understood by those skilled in the art that various changes in form and details may be made therein without departing from the spirit and scope of the present invention as defined by the appended claims.

## Claims

1. A PC-integrated TV comprising:
a PC unit that includes a PC main board having a CPU, a main memory device, a video controller, an audio controller, and a system chipset provided thereon and an auxiliary memory device having an operating system mounted therein;
a TV unit that includes a TV signal processing section configured to process TV signals and a controller configured to process internal and external controls;
a Switching Mode Power Supply (SMPS) unit that supplies power to the TV unit and PC unit; and
a PC-TV interface unit that serves as an interface between the TV unit and the PC unit,
wherein the PC-TV interface unit connects the video controller, the audio controller, and the system chipset of the PC unit to the TV signal processing section and the controller of the TV unit.

2. The PC-integrated TV of claim 1, wherein the PC-TV interface unit is composed of a 40-pin connector.

3. The PC-integrated TV of claim 1, wherein the PC main board of the PC unit further includes a Universal Serial Bus (USB) controller, the TV unit includes input/output ports of the USB controller, and the PC-TV interface unit connects the USB controller of the PC main board to the input/output ports.

4. The PC-integrated TV of claim 1, wherein the PC main board of the PC unit further includes an Ethernet controller, the TV unit includes input/output ports of the Ethernet controller, and the PC-TV interface unit connects the Ethernet controller of the PC main board to the input/output ports.

5. The PC-integrated TV of claim 1, wherein the PC-TV interface unit delivers RGB signals output from the video controller of the PC unit to the TV signal processing section of the TV unit.

6. The PC-integrated TV of claim 1, wherein the PC-TV interface unit delivers analog or digital audio signals output from the audio controller of the PC unit to the TV signal processing section of the TV unit.

7. The PC-integrated TV of claim 1, wherein the PC-TV interface unit delivers control signals generated from the controller of the TV unit to the system chipset of the PC unit.
